# FASCICULE DE BREVET EUROPEEN

(11) **EP 2 070 819 B1**
(45) Date de publication et mention de la délivrance du brevet: **17.02.2010**
(21) Numéro de dépôt: 08018372.6
(22) Date de dépôt: 21.10.2008
(51) Int. Cl.: B64C 27/32, B64C 27/48

(54) **Pale de giravion, rotor de giravion muni de ladite pale, et procédé de fabrication de cette pale**
Blatt eines Drehflügelflugzeugs, mit einem solchen Blatt ausgestatteter Rotor eines Drehflügelflugzeugs und Herstellungsverfahren dieses Blatts
Rotorcraft blade, rotorcraft rotor equipped with said blade and method of manufacturing this blade

(30) Priorité: 14.12.2007 FR 0708698
(43) Date de publication de la demande: 17.06.2009
(73) Titulaire: EUROCOPTER, 13725 Marignane Cédex (FR)
(72) Inventeur: Parisy, Jean-Marie, 75003 Paris (FR); Metivier, Rémi, 75009 Paris (FR)
(74) Mandataire: GPI & Associés

(56) Documents cités:
- EP-A- 0 353 672
- EP-A- 0 429 353
- DE-A1- 1 406 494
- FR-A- 2 186 380
- US-A- 3 923 422

## Description

La présente invention concerne une pale de giravion, muni d'un longeron sensiblement horizontal disposé à plat respectivement sur l'intrados et l'extrados de la pale, ainsi que le rotor de giravion sur lequel la pale est agencée et le procédé de fabrication de cette pale.

Un giravion est muni d'au moins un moteur qui entraîne au moins un rotor principal ayant pour but d'assurer la sustentation, voire même la propulsion, de l'appareil. Ce rotor comporte un moyeu, mis en mouvement via un arbre rotor entraîné par le moteur, sur lequel sont agencées une pluralité de pales.

Lors de leur mouvement rotatif, les pales sont soumises à un torseur d'efforts et par suite subissent un effort centrifuge ainsi que des effets multiples dus au battement, à la traînée et à la torsion, la torsion étant provoquée notamment par les changements de pas visant à modifier l'inclinaison des pales par rapport au plan du moyeu.

En outre, le moyeu comporte généralement une pluralité de bras, éventuellement flexibles en battement, au bout desquels sont agencées les pales. Les efforts dus en particulier à la force centrifuge sont alors transmis à la zone centrale non flexible du moyeu.

On connaît un premier type de pale équipée d'un longeron, qui à partir du pied de la pale s'étend le long de l'envergure de la pale, agencé au niveau du bord d'attaque de la pale. On nommera ce type de longeron « longeron de bord d'attaque » par commodité.

Ce type de longeron est efficace mais semble insuffisant pour les pales modernes qui présentent des géométries complexes, pour des raisons acoustiques par exemple.

On connaît selon le document DE 1406494 une pale munie d'alésages horizontaux.

On connaît alors un deuxième type de pale muni d'au moins un premier longeron sensiblement horizontal qui est disposé à plat respectivement sur l'intrados et l'extrados de la pale. Classiquement, l'homme du métier tend à définir un tel longeron disposé à plat par l'expression « longeron réparti » puisque le premier longeron est réparti selon la corde de la pale sur l'extrados et l'intrados de cette pale. Les expressions « longeron réparti » et « longeron disposé à plat », voire « longeron réparti disposé à plat » utilisées dans la suite du texte se rapportent donc toutes à un même type de longeron.

Il est à noter qu'il est possible de prévoir un deuxième longeron, du type « longeron de bord d'attaque » qui sera relié au premier longeron, à savoir le longeron réparti.

Le premier longeron est alors fixé au moyeu du rotor du giravion pour notamment transmettre à ce moyeu les efforts centrifuges.

Ce deuxième type de pale répond parfaitement aux exigences des hélicoptères modernes, et ce d'autant plus si le longeron réparti est associé à un longeron de bord d'attaque.

Toutefois, on constate qu'il est malheureusement délicat d'attacher une pale équipée d'un longeron réparti sur un moyeu de rotor.

On connaît par le document US 3923422 un premier dispositif pour réaliser une telle fonction. Au niveau du pied de la pale, le longeron réparti est enroulé autour d'une douille de fixation verticale parallèle à l'axe de rotation du rotor.

Toutefois, afin de réaliser un enroulement vertical autour d'une douille de fixation verticale, il convient de vriller le longeron réparti disposé à plat sur l'extrados et l'intrados de la pale. Un tel vrillage de l'ordre de quatre-vingt dix degrés présente l'inconvénient d'être éventuellement destructif, dans la mesure où un longeron est principalement constitué de fibres unidirectionnelles dans le cas de pales en matériaux composites.

Il est de plus malaisé de disposer à plat sur l'extrados et l'intrados de la pale les fibres unidirectionnelles provenant de la section vrillée du longeron réparti.

Le vrillage peut alors conduire à une faible reproductivité de la forme ainsi que des caractéristiques mécaniques et vibratoires d'une pale à une autre.

De plus, si des éléments de remplissage doivent être agencés dans la pale, ces derniers seront de forme complexe et varieront d'une pale à l'autre puisque le vrillage du longeron n'est pas reproduit à l'identique. II devient ainsi difficile d'automatiser la fabrication des pales.

II est alors envisageable d'enrouler le longeron « à l'horizontale », conformément au deuxième dispositif décrit par le document FR 2186380.

Toutefois, cette pale ne comporte pas de moyen de fixation. Elle est alors agencée dans un bras d'un moyeu de giravion ayant une géométrie très particulière, puis solidarisée à ce bras à l'aide d'une broche de fixation horizontale qui traverse le bras pour bloquer le longeron de la pale au niveau de son enroulement.

Pour vraisemblablement éviter un battement excessif de la pale, le bras comporte deux plaques supérieure et inférieure qui enserrent le longeron de la pale.

Cependant, ce deuxième dispositif ne semble pas être particulièrement bien adapté pour maitriser les efforts dus à la traînée de la pale.

Par conséquent, l'homme du métier tend à préférer des solutions mettant en oeuvre des douilles de fixation verticales, à l'image du premier dispositif précédemment décrit.

Compte tenu de la spécificité du domaine technique des pales de giravion, on comprend que les documents EP 0429353 et EP 0353672 décrivent des aubes munies de douilles verticales perpendiculaires au plan de rotation desdites aubes.

La présente invention a pour objet de proposer une pale de giravion comportant au moins un longeron principal réparti aisément reproductible, une attache de cette pale garantissant de plus une bonne maîtrise des efforts subis par la pale, à savoir les efforts centrifuges ainsi que les effets dus au battement, à la traînée et à la torsion de la pale,

Selon l'invention, une pale d'un rotor de giravion, munie d'un pied de pale et d'une extrémité libre opposée au dit pied de pale, est au moins pourvue d'un longeron principal, à savoir un longeron réparti sensiblement horizontal et disposé à plat sur un extrados et un intrados de la pale, ce longeron principal étant solidarisé à une attache au niveau dudit pied de la pale.

La pale selon l'invention est remarquable en ce que l'attache comporte une première et une deuxième douilles de fixation horizontales, ces premières et deuxièmes douilles de fixation étant donc d'une part perpendiculaires à l'envergure de la pale et d'autre part perpendiculaires à une direction en élévation, dirigée sensiblement selon la pesanteur pour un rotor principal de sustentation et de propulsion, la direction en élévation étant perpendiculaire à ladite envergure et étant apte à être perpendiculaire au plan de rotation de la pale lorsqu'elle est entraînée en rotation par ledit rotor.

Les axes longitudinaux des première et deuxième douilles sont ainsi horizontaux, et donc sensiblement parallèles aux portions du longeron réparti disposées à plat sur l'extrados et l'intrados de la pale. De plus, ces axes longitudinaux sont sensiblement perpendiculaires à l'envergure de la pale.

La première douille de fixation, à savoir la douille de fixation la plus proche du moyeu lorsque la pale est agencée sur un rotor de giravion, est ainsi intimement liée à la pale. Cette première douille de fixation reprend l'essentiel des efforts de la pale, transmis par le longeron principal disposé à plat, tels que les efforts centrifuges à la torsion et à la traînée de la pale.

De plus, cette première douille de fixation est extrêmement efficace pour transmettre les efforts centrifuges subis par la pale au moyeu du rotor.

La deuxième douille de fixation, c'est-à-dire la douille de fixation la plus proche de l'extrémité libre de la pale, est associée à la première douille. Compte tenu de la faible distance séparant les première et deuxième douilles de fixation, cette distance étant inférieure ou égale au dixième de l'envergure totale de la pale, la deuxième douille de fixation à un effet limité sur la reprise des efforts dus à la traînée ou à la torsion de la pale.

Par contre, la deuxième douille de fixation participe activement à la reprise des efforts dus au battement de la pale.

En outre, l'utilisation d'une première et d'une deuxième douilles de fixation horizontales permet de diminuer la pression de matage exercée sur l'attache par les broches permettant de fixer la pale au moyeu du rotor.

En effet, on verra par la suite que des première et deuxième broches vont être emmanchées dans les première et deuxième douilles de fixation. Ces premières et deuxièmes broches exerceront alors une pression, dénommée pression de matage, sur les douilles de fixation.

Or, cette pression de matage est inversement proportionnelle à la surface de contact entre une broche et la douille de fixation associée.

L'utilisation de deux douilles de fixation en position horizontale permet de maximiser ladite surface de contact et donc de minimiser la pression de matage afin de préserver l'intégrité physique des première et deuxième douilles de fixation et donc de l'attache. La pression de matage peut être réduite de moitié par rapport à un système d'attache classique ce qui est loin d'être négligeable.

De plus, l'utilisation de deux douilles de fixation en position horizontale permet de maximiser la raideur de ces douilles de fixation, les douilles de fixation pouvant alors supporter des forces plus importantes lors du battement ou de la torsion de la pale par exemple.

En effet, à encombrement équivalent, on constate qu'il est possible de maximiser le diamètre des douilles de fixation ce qui permet de maximiser leur moment d'inertie et donc leur raideur.

De même, à diamètre et à épaisseur équivalents, le moment d'inertie d'une douille de fixation en position horizontale par rapport à son axe neutre de flexion en battement est plus important que le moment d'inertie d'une douille de fixation en position verticale par rapport à son axe neutre de flexion en battement. Par conséquent, les contraintes exercées sur la douille de fixation selon l'invention sont minimisées.

Par ailleurs, chaque douille de fixation comporte éventuellement un enrobage extérieur cylindrique en matériaux composites qui entoure une pièce interne métallique.

Cette pièce interne métallique est un tube métallique à paroi fine qui est donc recouvert d'un enrobage extérieur cylindrique en matériaux composite. La pièce interne évite que la broche traversant la douille de fixation frotte contre les matériaux composites de l'enrobage extérieur. Par conséquent, on ne risque plus de dégrader les matériaux composites par usure, les matériaux composites ne supportant généralement pas une abrasion par frottement, même si les déplacements relatifs d'une broche par rapport à une douille de fixation sont faibles.

De plus, il est avantageux que la pièce interne métallique de la douille de fixation comporte un méplat en regard de l'extrémité libre de la pale opposée au dit pied de pale.

En effet, du fait des vibrations de la pale, de la rotation de cette pale par rapport à son axe de rotation durant un changement de pas, ou encore de ses mouvements de battement et de traînée, la pièce interne métallique de la douille de fixation risque de se désolidariser de l'enrobage extérieur qui la recouvre.

Cette désolidarisation entraînerait la création d'un jeu qui sera à l'origine de contraintes locales susceptibles de conduire à un accident ou de réduire la durée de vie de l'attache, et donc de la pale.

Cependant, en disposant un méplat sur le diamètre extérieur de la pièce métallique, on supprime le caractère strictement cylindrique de sa périphérie externe. La pièce interne métallique de la douille de fixation ne risque plus de tourner et de se désolidariser de l'enrobage extérieur qui la recouvre partiellement.

Le méplat des douilles est en outre en regard de l'extrémité libre de la pale. Cette disposition permet d'éviter que l'enrobage extérieur soit notamment détérioré au niveau de points anguleux, présents aux bords du méplat, sous l'effet de la force centrifuge.

En effet, si le méplat est en regard du pied de la pale, la force centrifuge exercée sur la pale tend à pousser l'enrobage extérieur contre le méplat ce qui génère localement des surcontraintes locales importantes et destructives au niveau desdits points anguleux.

L'immobilisation entre la pièce métallique et l'enrobage extérieur est assurée par le méplat et par collage. Le glissement de la pièce métallique dans son enrobage extérieur est évité par obstacle soit par emmanchement de bagues épaulées, soit par épaulement de la pièce métallique elle-même.

Enfin, l'enrobage extérieur possède de préférence au moins un chambrage de forme elliptique. La pièce interne métallique a alors une forme lui permettant d'épouser la forme du chambrage elliptique de l'enrobage extérieur.

Ce chambrage elliptique diminue les points de contact existant entre la pièce interne métallique et la broche qui sera insérée dans cette pièce interne. En plaçant ces points de contact dans des zones privilégiées, on préserve l'intégrité physique de l'attache.

Par ailleurs, l'attache de la pale comporte de préférence un système de calage séparant les première et deuxième douilles, ledit système de calage étant muni d'au moins un moyen de calage.

Le système de calage permet ainsi d'éviter que les première et deuxième douilles se rapprochent l'une de l'autre, que ce soit lors de la fabrication de l'attache ou lorsque la pale est fixée au rotor d'un giravion. De manière générale, le système de calage revêt son importance quand la pale est sollicitée, lors d'un vol ou à l'arrêt par exemple.

Chaque moyen de calage peut comporter une nervure verticale qui est perpendiculaire à une direction longitudinale d'une douille de fixation et à l'envergure de la pale. Cette nervure centrale garantit que le moyen de calage ne sera pas détérioré par la pression exercée sur l'attache durant sa polymérisation, et surtout en fonctionnement.

Selon un premier mode de réalisation, l'attache comporte un nombre pair de moyens de calages agencés de manière symétrique entre les première et deuxième douilles de fixation.

En effet, il peut être intéressant d'avoir un système de calage comportant une pluralité de nervures. Or, d'un point de vue financier, la réalisation d'un moyen de calage unique muni de plusieurs nervures est très onéreuse.

Par suite, il est préférable de fabriquer plusieurs moyens de calage comportant chacun une nervure, ces derniers étant agencés et collés les uns par rapport aux autres de manière symétrique pour que le système de calage obtenu ait finalement l'aspect d'un unique moyen de calage nervuré.

De plus, en accolant deux nervures de faibles épaisseurs l'une contre l'autre, on obtient une nervure ayant une épaisseur deux fois plus importante. Cette disposition permet de réaliser un système de calage très résistant à moindre coût.

Selon un deuxième mode de réalisation, le système de calage comporte un moyen de calage, à savoir une poutre centrale munie d'une nervure verticale, ainsi que deux éléments de calage externes présentant chacun une face verticale plane agencée contre la poutre centrale et une face verticale concave agencée contre une des première et deuxième douilles de fixation.

Par ailleurs, l'attache comportant une première et une deuxième douilles de fixation séparées par un système de calage, l'ensemble comprenant les première et deuxième douilles de fixation et ledit système de calage est recouvert d'un enrobage primaire en matériaux composites constitué d'un empilage de tissus et de rubans en fibres de verre.

Ainsi, l'enrobage primaire finalise proprement l'attache et assure une bonne cohésion dudit ensemble.

De plus, nous verrons par la suite qu'il est avantageux qu'une surface extérieure de l'enrobage primaire comporte un tissu de délaminage, ce qui permet de s'affranchir d'une phase de ponçage préalable au collage. Le tissu de délaminage peut alors comporter du polyester ou encore des polyamides.

La présente invention concerne non seulement une pale munie d'une attache innovante mais aussi le rotor équipé d'une ferrure inventive pour permettre la fixation de ladite pale.

Par conséquent, un rotor de giravion comporte un moyeu muni d'une pluralité de bras, une pale selon l'invention étant fixée à une ferrure de chaque bras.

Le rotor est remarquable en ce que, la ferrure comportant une zone de fixation en forme de U pourvue d'une première et d'une deuxième branches latérales et d'un fond, chaque branche latérale étant munie d'une première et d'une deuxième ouvertures, une première broche du rotor est emmanchée dans la ferrure de manière à traverser successivement la première ouverture de la première branche latérale, la première douille de fixation de la pale puis la première ouverture de la deuxième branche latérale alors qu'une deuxième broche du rotor est emmanchée dans la ferrure de manière à traverser successivement la deuxième ouverture de la première branche latérale, la deuxième douille de fixation de la pale puis la deuxième ouverture de la deuxième branche latérale.

Comme nous l'avons indiqué précédemment, cette disposition permet de limiter la pression de matage exercée par les première et deuxième broches.

De plus, l'utilisation d'une première et d'une deuxième douilles de fixation, et donc d'une première et d'une deuxième broches est suffisante pour supporter les battements de la pale, surtout à l'arrêt quand la pale n'est soumise qu'à son poids propre.

Enfin, les deuxièmes ouvertures de la ferrure sont avantageusement partiellement obturées par un palier élastomérique muni d'au moins une couche en élastomère disposée entre deux couches en matière rigide.

Les paliers élastomériques participent alors à l'amortissement des mouvements de battement de la pale.

Par ailleurs, l'invention a aussi pour objet le procédé de fabrication de la pale précédemment décrite, au cours duquel :
a) on fabrique une première et une deuxième douilles de fixation en disposant un enrobage extérieur sur chaque pièce interne métallique,
b) on dispose un système de calage entre lesdites première et deuxième douilles de fixation,
c) on recouvre l'ensemble comprenant les première et deuxième douilles de fixation et ledit système de calage d'un enrobage primaire dont la surface extérieure comporte un tissu de délaminage,
d) on polymérise l'attache constituée des première et deuxième douilles de fixation du système de calage et de l'enrobage primaire, le tissu de délaminage étant enlevée à l'issue de la polymérisation pour rendre rugueuse la surface extérieure de l'enrobage primaire de ladite attache, et
e) on fabrique la pale en enroulant le longeron principal à l'horizontale autour de ladite attache, le longeron principal pouvant être enroulé de manière dégressive ou non dans le sens de l'envergure et/ou de la corde de la pale.

Ce procédé de fabrication présente de multiples intérêts.

En premier lieu, le procédé engendre une totale maitrise du positionnement des éléments constitutifs de l'attache en supprimant tout risque de glissement.

En effet, il est courant d'observer un glissement des éléments d'une attache de pale au cours de sa fabrication. Classiquement, l'homme du métier dispose dans un moule les éléments de l'attache mais aussi les éléments constitutifs de la pale, tels que les longerons, les mousses, les nervures s'il y en a, les arêtiers de bord de fuite ou encore les protections de bord d'attaque par exemple.

Tous ces éléments peuvent se déplacer, ou être déplacés, lors de leur mise en place, souvent manuelle, dans le moule. De même, ils peuvent se déplacer durant la polymérisation de la pale, les résines utilisées devenant fluide du fait des pressions et des températures mises en oeuvre durant la polymérisation.

A contrario, selon l'invention, on préfabrique l'attache durant les étapes a) à d). A l'issue de ces étapes, l'attache sera contrôlée ce qui attestera sa conformité.

De plus, les dimensions de l'attache étant relativement faibles, contrairement à une pale de giravion, il est plus facile de contrôler la fabrication de cette attache.

Le procédé selon l'invention garantit donc l'obtention d'une attache conforme à sa spécification, et réduit à néant les risques de glissement d'une pièce par rapport à une autre.

En second lieu, l'attache permet un enroulement aisé du longeron principal, ce longeron principal étant un longeron réparti disposé à plat. Il suffit en effet de prendre la partie du longeron principal disposé à plat sur l'extrados puis de l'enrouler horizontalement autour de l'attache afin de la disposer à plat sur l'intrados de la pale.

Il n'est donc pas nécessaire de vriller le longeron pour l'enrouler autour de l'attache.

Enfin, en troisième lieu, l'étape d) est très importante puisqu'elle favorise une fixation de qualité du longeron principal sur l'attache sans difficultés particulières.

Cette étape d) consiste notamment à enlever le tissu de délaminage à l'issue de la polymérisation de l'attache, Ainsi, quand on enlève ce tissu, on dégrade légèrement la surface extérieure de l'attache, l'arrachage de ce tissu de délaminage générant des aspérités sur la surface extérieur.

Ces aspérités permettent alors à de la résine d'adhérer aisément à l'attache. Cette caractéristique est d'autant plus importante que les matériaux composites constituant le longeron principal sont peu chargés en résine pour ne pas affecter leur résistance mécanique. Par suite, il est appréciable que la surface extérieure de l'attache présente lesdites aspérités.

Il est à noter que l'homme du métier cherche généralement à obtenir ce résultat en ponçant la surface concernée. Cette méthode est efficace mais le résultat n'est pas forcément reproductible d'une pièce à une autre.

Par ailleurs, durant' l'étape c), on peut confectionner ledit enrobage primaire en empilant successivement une couche de tissu sur un ruban en fibres de verre.

En réalisant un tel empilement, en disposant une couche de tissu unidirectionnel entre deux rubans en fibres de verre, on évite d'avoir d'une part un « paquet » de tissus solidarisés à un « paquet » de rubans de fibres ce qui optimise la résistance mécanique de l'enrobage primaire.

Enfin, chaque couche de tissu de l'enrobage primaire étant unidirectionnelle, on utilise durant l'étape c) une pluralité de couches de tissu d'orientation différentes afin que l'enrobage primaire soit orthotrope. On peut par exemple utiliser des tissus orientés à +45°, -45° et 90°.

L'invention et ses avantages apparaîtront avec plus de détails dans le cadre de la description qui suit avec des exemples de réalisation donnés à titre illustratif en référence aux figures annexées qui représentent :
- la figure 1, une vue d'une pale selon l'invention,
- la figure 2, une vue schématique d'une douille de fixation,
- la figure 3, une vue éclatée d'une attache selon un premier mode de réalisation,
- la figure 4, une coupe transversale d'une attache selon un premier mode de réalisation,
- la figure 5, une coupe du système de calage selon un deuxième mode de réalisation, et
- la figure 6, une vue isométrique d'une ferrure du rotor selon l'invention.

Les éléments présents dans plusieurs figures distinctes sont affectés d'une seule et même référence.

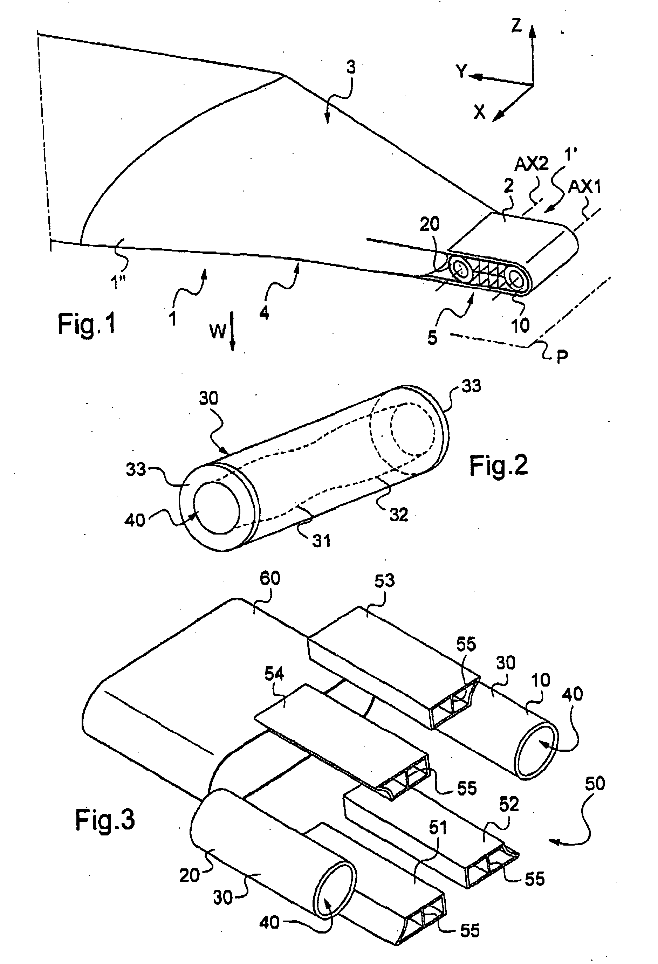

La figure 1 présente une pale 1 de giravion selon l'invention.

On note que trois directions X, Y et Z orthogonales les unes par rapport aux autres sont représentées sur la figure 1.

La direction X est dite longitudinale dans la mesure où les première et deuxième douilles de fixation 10, 20 de l'attache 5 de la pale 1 s'étendent localement selon cette direction.

Une autre direction Y est dite transversale. L'envergure de la pale 1 est dirigée selon cette direction transversale Y.

Enfin, une troisième direction Z est dite d'élévation et correspond aux dimensions en hauteur des structures décrites. On constate que la pesanteur W est parallèle à cette direction d'élévation Z.

Il convient de préciser que ces directions X, Y Z sont intimement liées à la pale. Par conséquent, la direction en élévation Z est parallèle à la pesanteur à une certaine incidence de cette pale 1. Si cette incidence pouvant varier, lorsque le pilote du giravion décide de changer le pas de la pale par exemple, la direction en élévation Z ne sera alors plus parallèle à la pesanteur mais légèrement inclinée par rapport à la pesanteur.

De plus, on note que le terme « horizontale » fait référence à un plan horizontal X,Y défini à l'aide des directions longitudinale X et transversale Y, alors que le terme « vertical » fait référence à un plan vertical X,Z défini à l'aide des directions longitudinale X et en élévation Z.

Par ailleurs, la pale 1 est munie d'un pied de pale 1' destiné à être fixé sur le moyeu d'un rotor de giravion, un rotor principal d'avancement et de sustentation ou un rotor arrière anti-couple par exemple, et d'une extrémité libre non représentée, cette extrémité libre se trouvant au bout de la pale 1 opposée au pied de pale 1'.

De plus, la pale 1 est munie d'un longeron principal 2 réparti, le longeron principal 2 étant considéré comme étant sensiblement horizontal dans la mesure où il est disposé à plat sur l'extrados 3 et l'intrados 4.

Ce longeron principal 2 est par suite enroulé horizontalement et solidarisé autour d'une attache 5, apte à autoriser la fixation du pied de pale 1' au moyeu du rotor, pour que le longeron principal 2 puisse être disposé à plat sur l'extrados 3 et sur l'intrados 4.

On note que la pale 1 comporte en outre un longeron de bord d'attaque 1" relié au longeron principal 2 par des moyens usuels.

L'attache 5 de la pale 1 est pourvue d'une première et deuxième douilles de fixation 10, 20 horizontales, séparées par un système de calage 50. Plus précisément, ces première et deuxième douilles de fixation 10, 20 sont d'un part perpendiculaire à l'envergure de la pale et donc à la direction transversale Y et, d'autre part perpendiculaire à la pesanteur W et donc à la direction en élévation Z.

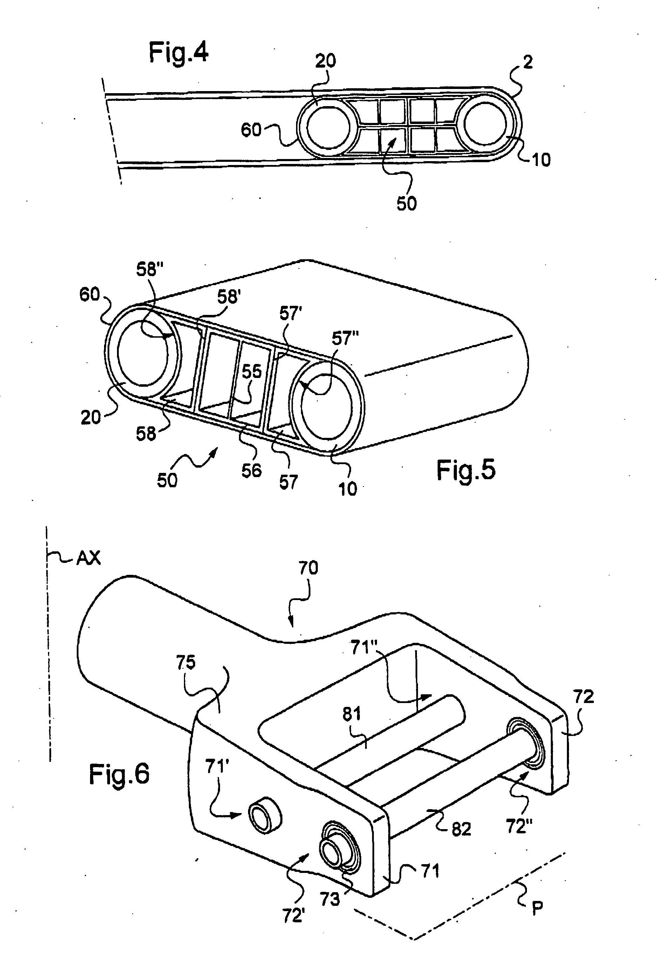

Par suite, les première et deuxième douilles de fixation sont perpendiculaires à l'axe de rotation (AX) du rotor, schématisé sur la figure 6.

De plus, la direction en élévation étant perpendiculaire au plan de rotation (P) de la pale autour de l'axe de rotation (AX), les première et deuxième douilles de fixation sont parallèles audit plan de rotation (P).

Les axes longitudinaux AX1, AX2 des première et deuxième douilles de fixation sont ainsi horizontaux et parallèles à la direction longitudinale X.

Par suite, la première douille de fixation 10 reprend les efforts centrifuges ainsi que les efforts dus au battement, à la torsion et à la traînée de la pale 1.

A contrario, la distance L séparant les axes longitudinaux AX1, AX2 des première et deuxièmes douilles de fixation 10, 20 étant faible, à savoir inférieure ou égale au dixième de l'envergure de la pale, la deuxième douille de fixation 20 participe essentiellement à la reprise des efforts centrifuges et aux efforts dus au battement de la pale 1.

La figure 2 présente une vue d'une douille de fixation de l'attache 5.

Chaque douille de fixation 10, 20 comporte un enrobage extérieur 30 qui entoure une pièce interne métallique 40, un tube à paroi fine.

L'enrobage extérieur possède une premier et une deuxième chambrages elliptiques 31, 32. Par conséquent, la pièce interne métallique 40 a une forme lui permettant de coopérer avec les chambrages elliptiques de l'enrobage.

Concrètement, durant une étape a) du procédé de fabrication de la pale 1, on usine la pièce interne métallique 40 en lui donnant la forme voulue puis on dispose l'enrobage extérieur 30 sur cette pièce interne métallique 40 afin de fabriquer les première et deuxième douilles de fixation 10, 20.

De même, il est envisageable de prévoir des épaulements 33 au bord de la pièce interne métallique pour garantir l'absence de mouvements translatifs.

Une fois que l'on a fabriqué les première et deuxièmes douilles de fixation 10, 20, durant une étape b), on dispose un système de calage 50 entre ces première et deuxième douilles de fixation 10, 20. Le système de calage 50 évite que les première et deuxième douilles de fixation 10, 20 puissent se rapprocher l'une de l'autre.

Le système de calage 50 comporte alors au moins un moyen de calage muni d'une nervure vertical pour garantir que le moyen de calage résistera à la pression exercée sur l'attache durant sa polymérisation.

Selon un premier mode de réalisation, décrit par la figure 3, le système de calage 50 comporte un nombre pair de moyens de calage, plus précisément quatre moyens de calage 51, 52, 53, 54 pourvus chacun d'une nervure verticale 55, dirigée parallèlement au plan vertical X,Z.

En référence à la figure 4, les quatre moyens de calage 51, 52, 53, 54 sont collés les uns aux autres en respectant une symétrie de miroir. Le système de calage 50 est ainsi en contact avec les premières et deuxième douilles de fixation 10, 20.

Selon un deuxième mode de réalisation, présenté sur la figure 5, le système de calage 50 comporte une poutre centrale 56, munie d'une nervure verticale 55, ainsi qu'un premier et un deuxième éléments de calage externes 57, 58.

Par suite, le premier élément de calage externe 57 est pourvu d'une première face verticale plane 57', collée à la poutre centrale 56, et d'une première face verticale concave 57" dont la concavité est en regard de la première douille de fixation 10 afin d'être en contact avec cette première douille de fixation 10.

De même, le deuxième élément de calage externe 58 est pourvu d'une deuxième face verticale plane 58', collée à la poutre centrale 56, et d'une deuxième face verticale concave 58" dont la concavité est en regard de la deuxième douille de fixation 20 afin d'être en contact avec cette deuxième douille de fixation 20.

Ensuite, quel que soit le mode de réalisation choisi, durant une étape c), on recouvre l'ensemble première et deuxième douilles de fixation 10, 20/ système de calage 50 d'un enrobage primaire 60 en matériaux composites. L'enrobage primaire 60 comporte un empilement de tissus et de rubans de fibres, chaque ruban de fibres étant coincé entre deux tissus.

Durant une étape d) faisant suite à l'étape c), on procède à la polymérisation de l'attache 5, en mettant en oeuvre des techniques usuelles, afin de finaliser la fabrication de cette attache 5.

La surface extérieure de l'enrobage primaire 60 comportant avantageusement un tissu de délaminage, on enlève ce tissu de délaminage à l'issue de la polymérisation de la pale 1.

Par suite, on crée des porosités sur cette surface extérieure.

Enfin, durant une étape e), on enroule le longeron principal 2 de la pale 1 autour de l'attache 5. Les porosités résultant de l'enlèvement du tissu de délaminage favorise l'adhésion du longeron 2 sur l'attache 5.

En référence à la figure 6, lorsque la pale 1 est terminée, il convient de l'agencer sur le giravion, plus précisément sur le moyeu d'un rotor du giravion.

Le moyeu du rotor comporte à cet effet une ferrure 70 munie d'une zone de fixation en forme de U comportant une première et une deuxième branches latérales 71, 72 et un fond 75.

Les première et deuxième branches latérales 71, 72 sont percées et possèdent chacune une première et une deuxième ouvertures 71', 71", 72', 72".

Les deuxièmes ouvertures 72', 72" sont de préférence équipées d'un palier élastomérique 73 qui l'obture partiellement, le palier élastomérique remplissant en quelque sorte une fonction d'amortissement.

Dans ces conditions, chaque palier élastomérique comporte un empilement muni d'au moins une couche en élastomère et d'une couche rigide, chaque couche en élastomère étant coincée entre deux couches rigides.

Pour fixer la pale 1, on présente alors le pied 1' de la pale entre les première et deuxième branches latérales 71, 72 de la ferrure.

Par suite, on insère une première broche 81 dans la première ouverture 71' de la première branche latérale 71 et on le fait pénétrer successivement dans la première douille de fixation 10 de l'attache 5 puis dans la première ouverture 71" de la deuxième branche latérale 72.

De même, on insère une deuxième broche 82 dans le palier 73 de la deuxième ouverture 72' de la première branche latérale 71 et on le fait pénétrer successivement dans la deuxième douille de fixation 20 de l'attache 5 puis dans le palier 73 de la deuxième ouverture 72" de la deuxième branche latérale 72.

Afin de finaliser la fixation de la pale 1 dans la ferrure 70, il suffit d'utiliser des moyens usuels pour interdire tout mouvement translatif des première et deuxième broches 81, 82 par rapport à l'attache 5 de la pale 1.

Naturellement, la présente invention est sujette à de nombreuses variations quant à sa mise en oeuvre. Bien que plusieurs modes de réalisations aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Pale (1) d'un rotor de giravion munie d'un pied de pale (1') et d'une extrémité libre opposée au dit pied de pale (1'), ladite pale (1) étant au moins pourvue d'un longeron principal (2) disposé à plat sur un extrados (3) et un intrados (4) de la pale (1), ledit longeron (2) étant solidarisé à une attache (5) au niveau dudit pied (1') de la pale,
**caractérisée en ce que** ladite attache (5) comporte une première et une deuxième douilles de fixation (10, 20) horizontales, lesdites premières et deuxièmes douilles de fixation (10, 20) étant d'une part perpendiculaires à l'envergure de la pale (1) et d'autre part sensiblement perpendiculaires à une direction en élévation (Z), ladite direction en élévation étant perpendiculaire à ladite envergure et au plan de rotation de la pale lorsque cette pale est entraînée en rotation par ledit rotor.

2. Pale selon la revendication 1,
**caractérisée en ce que** chaque douille de fixation (10, 20) comporte un enrobage extérieur (30) cylindrique en matériaux composites qui entoure une pièce interne métallique (40).

3. Pale selon la revendication 2,
**caractérisée en ce que** ledit enrobage extérieur (30) comporte un méplat en regard de ladite extrémité libre de la pale opposée au dit pied de pale.

4. Pale selon l'une quelconque des revendications 2 à 3,
**caractérisée en ce que** ledit enrobage extérieur (30) possède au moins un chambrage (31, 32) de forme elliptique.

5. Pale selon l'une quelconque des revendications précédentes,
**caractérisée en ce que** ladite attache (5) comporte un système de calage (50) séparant les première et deuxième douilles de fixation (10, 20), ledit système de calage (50) étant muni d'au moins un moyen de calage (51, 52, 53, 54, 56).

6. Pale selon la revendication 5,
**caractérisée en ce que** chaque moyen de calage (51, 52, 53, 54, 56) comporte une nervure verticale (55), ladite nervure verticale (55) étant perpendiculaire à un axe longitudinal (AX1, AX2) d'une douille de fixation (10, 20) et à ladite envergure de la pale (1).

7. Pale selon l'une quelconque des revendications 5 à 6,
**caractérisée en ce que** ladite attache (5) comporte un nombre pair de moyens de calage (51, 52, 53, 54) agencés de manière symétrique entre lesdites première et deuxième douilles de fixation (10, 20).

8. Pale selon l'une quelconque des revendications 5 à 7,
**caractérisée en ce que** ledit système de calage (50) comporte un moyen de calage (56), à savoir une poutre centrale (56) munie d'un nervure verticale (55), ainsi que deux éléments de calage externes (57, 58) présentant chacun une face verticale plane (57', 58') agencée contre ladite poutre centrale (56) et une face verticale concave (57", 58") agencée contre une des dites première et deuxième douilles de fixation (10, 20).

9. Pale selon l'une quelconque des revendications précédentes,
**caractérisée en ce que** ladite attache (5) comportant une première et une deuxième douilles de fixation (10, 20) séparées par un système de calage (50), l'ensemble comprenant les première et deuxième douilles de fixation (10, 20) et ledit système de calage (50) est recouvert d'un enrobage primaire (30) en matériaux composites constitué d'un empilage de tissus et de rubans en fibres de verre.

10. Pale selon la revendication 9,
**caractérisée en ce qu'**une surface extérieure dudit enrobage primaire (30) comporte un tissu de délaminage.

11. Rotor de giravion comportant un moyeu muni d'une pluralité de bras, une pale (1) selon l'une quelconque des revendications précédentes étant fixée à une ferrure (70) de chaque bras,
**caractérisé en ce que**, ladite ferrure (70) comportant une zone de fixation en forme de U pourvue d'une première et d'une deuxième branches latérales (71, 72) et d'un fond (75), chaque branche latérale (71, 72) étant munie d'une première et d'une deuxième ouvertures (71'-72', 71"-72"), une première broche (81) dudit rotor est emmanchée dans ladite ferrure (70) de manière à traverser successivement ladite première ouverture (71') de la première branche latérale (71), la première douille de fixation (10) de la pale (1) puis la première ouverture (71") de la deuxième branche latérale (72) alors qu'une deuxième broche (82) dudit rotor est emmanchée dans ladite ferrure (70) de manière à traverser successivement ladite deuxième ouverture (72') de la première branche latérale (71), la deuxième douille de fixation (20) de la pale puis la deuxième ouverture (72") de la deuxième branche latérale (72).

12. Rotor selon la revendication 11,
**caractérisé en ce que** lesdites deuxièmes ouvertures (72', 72") sont partiellement obturées par un palier élastomérique (73) muni d'au moins une couche en élastomère disposée entre deux couches en matière rigide.

13. Procédé de fabrication d'une pale selon l'une quelconque des revendications 1 à 10, au cours duquel,
a) on fabrique une première et une deuxième douilles de fixation (10, 20) en disposant un enrobage extérieur (30) sur chaque pièce interne métallique (40),
b) on dispose un système de calage (50) entre lesdites première et deuxième douilles de fixation (10, 20),
c) on recouvre l'ensemble comprenant les première et deuxième douilles de fixation (10, 20) et ledit système de calage (50) d'un enrobage primaire (60) dont la surface extérieure comporte un tissu de délaminage,
d) on polymérise l'attache (5) constituée des première et deuxième douilles de fixation (10, 20) du système de calage (50) et de l'enrobage primaire (60), le tissu de délaminage étant enlevé à l'issue de la polymérisation pour rendre rugueuse la surface extérieure de l'enrobage primaire (60) de ladite attache (5), et
e) on fabrique la pale (1) en enroulant le longeron principal (2) à l'horizontal autour de ladite attache (5).

14. Procédé selon la revendication 13,
**caractérisé en ce que**, durant l'étape c), on confectionne ledit enrobage primaire (60) en empilant successivement une couche de tissu sur un ruban en fibres de verre.

15. Procédé selon l'une quelconque des revendications précédentes,
**caractérisé en ce que**, chaque couche de tissu de l'enrobage primaire (60) étant unidirectionnelle, on utilise durant l'étape c) une pluralité de couches de tissu d'orientation différentes afin que l'enrobage primaire (60) soit orthotrope.

## Claims

1. Rotorcraft rotor blade (1) having a blade root (1') and a free end remote from said blade root (1'), said blade (1) being at least provided with a main spar (2) laid flat on a suction-side face (3) and a pressure-side face (4) of the blade (1), said spar (2) being secured to an attachment fitting (5) at said blade root (1'),
**characterised in that** said attachment fitting (5) comprises first and second horizontal fastener bushings (10, 20), said first and second fastener bushings (10, 20) being firstly perpendicular to the span of the blade (1) and secondly substantially perpendicular to an elevation direction (Z), said elevation direction being perpendicular to said span and to the plane of rotation of the blade when said blade is rotated by said rotor.

2. Blade according to Claim 1,
**characterised in that** each fastener bushing (10, 20) comprises a cylindrical outer coating (30) of composite material surrounding a metal inner part (40).

3. Blade according to Claim 2,
**characterised in that** said outer coating (30) includes a flat facing said free end of the blade remote from said blade root.

4. Blade according to either one of Claims 2 and 3,
**characterised in that** said outer coating (30) possesses at least one elliptically-shaped recess (31, 32).

5. Blade according to any one of the preceding claims,
**characterised in that** said attachment fitting (5) includes a spacer system (50) separating the first and second fastener bushings (10, 20), said spacer system (50) being provided with at least one spacer means (51, 52, 53, 54, 56).

6. Blade according to Claim 5,
**characterised in that** each spacer means (51, 52, 53, 54, 56) includes a vertical rib (55), said vertical rib (55) being perpendicular to a longitudinal axis (AX1, AX2) of a fastener bushing (10, 20) and to said span of the blade (1).

7. Blade according to either one of Claims 5 and 6,
**characterised in that** said attachment fitting (5) has an even number of spacer means (51, 52, 53, 54) arranged symmetrically between said first and second fastener bushings (10, 20).

8. Blade according to any one of Claims 5 to 7,
**characterised in that** said spacer system (50) comprises spacer means (56), i.e. a central beam (56) provided with a vertical rib (55), together with two outer spacer elements (57, 58) each presenting a plane vertical face (57', 58') arranged against said central beam (56), and a concave vertical face (57", 58") arranged against a respective one of said first and second fastener bushings (10, 20).

9. Blade according to any one of the preceding claims,
**characterised in that** said attachment fitting (5) comprises first and second fastener bushings (10, 20) spaced apart by a spacer system (50), the assembly comprising the first and second fastener bushings (10, 20) and said spacer system (50) being covered in a primary coating (30) of composite material made up of a stack of fabric and glass-fibre tape.

10. Blade according to Claim 9,
**characterised in that** an outer surface of said primary coating (30) includes a delamination fabric.

11. Rotorcraft rotor comprising a hub provided with a plurality of arms, a blade (1) according to any one of the preceding claims being fastened to a mount (70) of each arm,
**characterised in that** said mount (70) has a U-shaped fastener zone provided with first and second side branches (71, 72) and an end wall (75), each side wall (71, 72) being provided with first and second openings (71'-72', 71"-72"), a first pin (81) of said rotor is engaged in said mount (70) so as to pass in succession through said first opening (71') of the first side branch (71), the first fastener bushing (10) of the blade (1), and then the first opening (71") of the second side branch (72), while a second pin (82) of said rotor is engaged in said mount (70) so as to pass in succession through said second opening (72') of the first side branch (71), the second fastener bushing (20) of the blade, and then the second opening (72") of the second side branch (72).

12. Rotor according to Claim 11,
**characterised in that** said second openings (72', 72") are closed in part by an elastomer bearing (73) provided with at least one layer of elastomer disposed between two layers of rigid material.

13. Method of fabricating a blade according to any one of Claims 1 to 10, said method comprising the following steps:
a) fabricating first and second fastener bushings (10, 20) by placing an outer coating (30) on each metal inner part (40);
b) placing a spacer system (50) between said first and second fastener bushings (10, 20);
c) covering the assembly comprising the first and second fastener bushings (10, 20) and said spacer system (50) in a primary coating (60) having an outer surface that includes a delamination fabric;
d) polymerising the attachment fitting (5) constituted by the first and second fastener bushings (10, 20), the spacer system (50), and the primary coating (60), the delamination fabric being removed after polymerisation in order to roughen the outer surface of the primary coating (60) of said fastener fitting (5); and
e) fabricating the blade (1) by winding the main spar (2) horizontally around said attachment fitting (5).

14. Method according to Claim 13,
**characterised in that** during step c), said primary coating (60) is made by successively stacking a layer of fabric on a glass-fibre tape.

15. Method according to any one of the preceding claims,
**characterised in that**, since each layer of fabric of the primary coating (60) is unidirectional, a plurality of layers of fabric are used during step c) with different orientations so as to enable the primary coating (60) to be orthotropic.

## Patentansprüche

1. Rotorblatt (1) eines Drehflügelflugzeugs mit einem Rotorblattfuß (1') und einem dem Rotorblattfuß (1') gegenüberliegenden freien Ende, wobei das Rotorblatt (1) mindestens mit einer Hauptlängsversteifung (2) versehen ist, die flach auf einer Saugseite (3) und einer Druckseite (4) des Rotorblatts (1) angeordnet ist, wobei die Hauptlängsversteifung auf der Höhe des Rotorblattfußes (1') an einem Befestigungsmittel (5) befestigt ist,
**dadurch gekennzeichnet, dass** das Befestigungsmittel (5) eine erste und eine zweite horizontale Befestigungsbuchse (10, 20) aufweist, wobei die ersten und zweiten Befestigungsbuchsen (10, 20) einerseits senkrecht zur Flügellängserstreckung des Rotorblattes (1) und andererseits ungefähr senkrecht bezüglich einer vertikalen Richtung (Z) angeordnet sind, wobei die Vertikalrichtung senkrecht zur Längserstreckung des Rotorblattes und zur Rotationsebene des Rotorblattes verläuft, wenn dieses Rotorblatt durch den Rotor in eine Drehbewegung versetzt ist.

2. Rotorblatt nach Anspruch 1, **dadurch gekennzeichnet, dass** jede Befestigungsbuchse (10, 20) eine äußere zylinderförmige Ummantelung (30) aus Verbundmaterial aufweist, die ein inneres Teil aus Metall (40) umhüllt.

3. Rotorblatt nach Anspruch 2, **dadurch gekennzeichnet, dass** die äußere Umhüllung (30) eine Abflachung gegenüber dem freien Ende des Rotorblatts, welches dem Rotorblattfuß gegenüberliegt, aufweist.

4. Rotorblatt nach einem der Ansprüche 2 oder 3, **dadurch gekennzeichnet, dass** die äußere Umhüllung (30) mindestens eine Einsenkung (31, 32) in elliptischer Form aufweist.

5. Rotorblatt nach einem der vorstehenden Ansprüche, **dadurch gekennzeichnet, dass** das Befestigungsmittel (5) ein Klemmsystem (50) aufweist, welches die ersten und zweiten Befestigungsbuchsen (10, 20) trennt, wobei das Klemmsystem (50) mit mindestens einem Klemmmittel (51, 52, 53 54, 56) ausgestattet ist.

6. Rotorblatt nach Anspruch 5, **dadurch gekennzeichnet, dass** jedes Klemmmittel (51, 52, 53, 54, 56) eine vertikale Rippe (55) aufweist, die senkrecht zu einer Längsachse (AX1, AX2) einer Befestigungsbuchse (10, 20) und zur Längserstreckung des Rotorblatts (1) verläuft.

7. Rotorblatt nach einem der Ansprüche 5 oder 6, **dadurch gekennzeichnet, dass** das Befestigungsmittel (5) eine gerade Anzahl von Klemmmitteln (51, 52, 53, 54) aufweist, die symmetrisch zwischen den ersten und zweiten Befestigungsbuchsen (10, 20) angeordnet sind.

8. Rotorblatt nach einem der Ansprüche 5 bis 7, **dadurch gekennzeichnet, dass** das Klemmsystem (50) ein Klemmmittel (56) in Form eines zentralen Balkens (56) aufweist, der mit einer vertikalen Rippe (55) versehen ist, sowie zwei äußere Klemmelemente (57, 58), die jeweils eine ebene vertikale Seite (57', 58') aufweisen, die gegenüber dem mittleren Balken (56) angeordnet sind, sowie eine vertikale konkave Fläche (57", 58"), die gegenüber den ersten und zweiten Befestigungsbuchsen (10, 20) angeordnet ist.

9. Rotorblatt nach einem der vorstehenden Ansprüche, **dadurch gekennzeichnet, dass** das Befestigungsmittel (5) eine erste und eine zweite Befestigungsbuchse (10, 20) aufweist, die durch ein Klemmsystem (50) voneinander getrennt sind, wobei die ersten und zweiten Befestigungsbuchsen (10, 20) und das Klemmsystem (50) mit einer primären Ummantelung (30) aus Verbundmaterial beschichtet sind, welches aus einer Schichtung von Geweben und Bändern aus Glasfaser besteht.

10. Rotorblatt nach Anspruch 9, **dadurch gekennzeichnet, dass** eine Außenfläche der primären Ummantelung (30) ein Kaschiergewebe aufweist.

11. Rotor eines Drehflügelflugzeugs mit einem Mittel, welches mit einer Mehrzahl von Armen versehen ist, und bei dem ein Rotorblatt (1) gemäß einem beliebigen vorstehenden Anspruch an einem Beschlag (70) eines jeden Arms befestigt ist, **dadurch gekennzeichnet, dass** der Beschlag (70) einen U-förmigen Befestigungsbereich aufweist, der mit einem ersten und einem zweiten seitlichen Arm (71, 72) und einem Boden (75) versehen ist, wobei jeder Seitenarm (71, 72) mit einer ersten und einer zweiten Öffnung (71'-72', 71"-72") versehen ist, wobei ein erster Zapfen (81) des Rotors in den Beschlag (70) so eingesteckt ist, dass er nacheinander die erste Öffnung (71') des ersten Seitenarms (71), die erste Befestigungsbuchse (10) des Rotorblatts (1) und schließlich die erste Öffnung (71") des zweiten Seitenarmes (72) durchquert, während ein zweiter Zapfen (72) des Rotors in den Beschlag (70) so eingesteckt ist, dass er aufeinanderfolgend die zweite Öffnung (72') des ersten Seitenarmes (71), die zweite Befestigungsbuchse (20) des Rotorblatts und schließlich die zweite Öffnung (72") des zweiten Seitenarms (72) durchquert.

12. Rotor nach Anspruch 11, **dadurch gekennzeichnet, dass** die zweiten Öffnungen (72', 72") teilweise mit einem Elastomerlager (73) verschlossen sind, welches mindestens eine Elastomerschicht zwischen zwei Schichten aus einem steifen Material aufweist.

13. Verfahren zur Herstellung eines Rotorblatts nach einem der Ansprüche 1 bis 10, bei dem
a) eine erste und eine zweite Befestigungsbuchse (10, 20) hergestellt werden, indem eine äußere Ummantelung (30) auf jedem inneren Metallteil (40) aufgebracht wird,
b) ein Klemmsystem (50) zwischen den ersten und zweiten Befestigungsbuchsen (10, 20) angeordnet wird,
c) die Gesamtheit bestehend aus den ersten und zweiten Befestigungsbuchsen (10, 20) und dem Klemmsystem (50) mit einer primären Ummantelung (60) bedeckt wird, deren äußere Oberfläche ein Kaschiergewebe aufweist,
d) das Befestigungsmittel (5), welches aus der ersten und der zweiten Befestigungsbuchse (10, 20), dem Klemmsystem (50) und der primären Ummantelung (60) besteht, polymerisiert wird, wobei das Kaschiergewebe während des Auftragens des Polymers angehoben wird, um die äußere Oberfläche der primären Ummantelung (60) des Befestigungsmittels (5) aufzurauhen, und
e) das Rotorblatt (1) hergestellt wird, indem die Hauptlängsversteifung (2) horizontal um das Befestigungsmittel (5) gewickelt wird.

14. Verfahren nach Anspruch 13, **dadurch gekennzeichnet, dass** während des Verfahrensschritts (c) die primäre Ummantelung (60) konfektioniert wird, indem aufeinanderfolgend jeweils eine Schicht Gewebe und ein Glasfaserband abwechselnd aufeinandergeschichtet werden.

15. Verfahren nach einem der Ansprüche 13 oder 14, **dadurch gekennzeichnet, dass** jede Gewebeschicht der Primärummantelung (60) unidirektional ist und während des Schrittes (c) eine Mehrzahl von Geweben mit unterschiedlicher Orientierung verwendet wird, sodass die Primärummantelung orthotrop ist.
